# EUROPEAN PATENT SPECIFICATION

(11) **EP 2 606 953 B1**
(45) Date of publication and mention of the grant of the patent: **18.03.2015**
(21) Application number: 11195559.7
(22) Date of filing: 23.12.2011
(51) Int. Cl.: B01D 61/36

(54) **Membrane distillation system, method of starting such a system and use thereof**
Membrandestillationssystem, Verfahren zum Starten eines solchen Systems und Verwendung davon
Système de distillation membranaire, procédé de démarrage d'un tel système et utilisation associée

(43) Date of publication of application: 26.06.2013
(73) Proprietor: Aquaver B.V., 5602 BJ Eindhoven (NL)
(72) Inventor: Weijdema, Hein, 3047 AC Rotterdam (NL); Maessen, Ralph T.H., 3047 AC Rotterdam (NL)
(74) Representative: Nollen, Maarten Dirk-Johan

(56) References cited:
- EP-A2- 0 094 543
- WO-A1-2005/089914
- WO-A1-2007/054311
- DE-A1-102009 020 179

## Description

### Field of the invention

The invention relates to a membrane distillation system comprising a plurality of membrane distillation modules that are pressure-wise coupled in series, such that each subsequent membrane distillation module operates at a lower pressure than a preceding membrane distillation module, each of which membrane distillation modules comprises:
- A liquid channel with a fluid entry and a fluid exit and a hydrophobic, vapor permeable membrane through which evaporated liquid may pass; and
- a vapor space adjacent to the liquid channel and separated therefrom through the hydrophobic, vapor permeable membrane, through which evaporated liquid may pass into the vapor space, which vapor space further comprises a condensation wall and a distillate exit for a distillate generated by means of condensation of the evaporated liquid.
The invention further relates to a method of starting up a membrane distillation system, as well as to the use of such a membrane distillation system for water purification, waste water concentration, for air conditioning and/or for other liquid purification applications, such as the removal of water from ethanol.

### Background of the invention

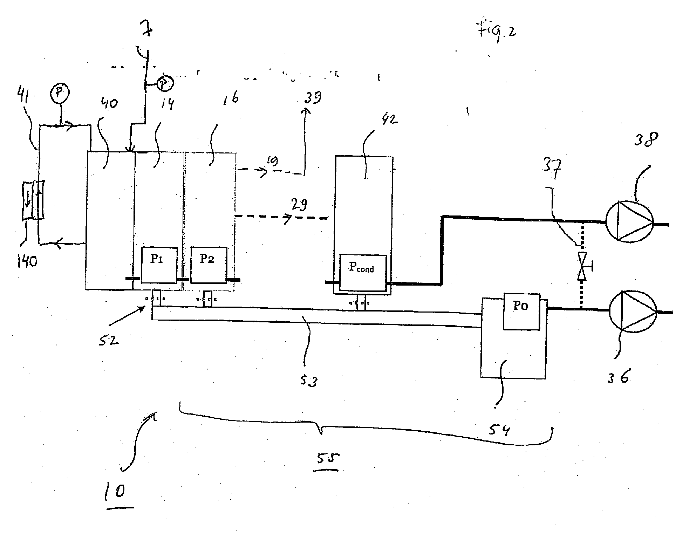

The use of membrane distillation for desalination of water has already been investigated in the 1980s. EP0094543A2 discloses a membrane distillation system as defined hereabove, and discloses a series of graphs in its Figures 11 to 18, in which the volume of distillate is shown as a function of temperature and underpressure. While the primary embodiment shows a single distillation module, it is clear from f.i. Fig. 2 that a plurality of membrane distillation modules may be put in series.
Further elaborations of said basic principles are known from WO-A 2005/089914, WO-A 2007/054311 and WO-A 2010/0127818. WO-A-2005/089914 discloses in its Fig. 2 an embodiment of a series coupling of several distillation modules. The first of said distillation modules mere generates vapour, which is used as a heat source in the second distillation module for the needed evaporation from the feed liquid, and then converted into distillate. The second distillation module again generates new vapour that is used as a heat source in the third distillation module and thus condensated into distillate. The vapour resulting from the third distillation module is condensated a separate condenser module.

In the embodiment of WO-A-2005/089914, a plurality of liquid channels and vapor spaces is put in parallel within one distillation module, so as to increase the effective surface area. This is moreover an effective design for heat exchange; a single vapour channel is present between two liquid channels, thus minimizing heat losses to the environment. If the liquid channel is designed to be narrow, the feed liquid can easily fill the liquid channel, leading to maximation of the effective surface area.

An effective implementation providing such narrow liquid channels hereof is disclosed in WO-A 2010/0127818, in the form of a weldable and stackable frame, in which the required channels within one distillation module are defined. If desired, fluid and/or vapour connections between subsequent distillation modules may be implemented into the stack of frames. Each frame may be provided with foils chosen from a.o. hydrophobic membranes and condensation walls. Hence, a liquid channel is defined with a frame provided with a condensation wall foil on one side, and a hydrophobic membrane foil on the opposed side.

WO-A 2007/054311 discloses furthermore an arrangement for controlling the underpressure in the series of distillation modules. Fig. 5 in particular shows a system with membranes embodied as walls. This patent application specifies the use of a siphon between the feed liquid and the vapour channel from the last distillation module into the condenser, in order to bring the feed liquid to a predefined underpressure. Therewith, the feed liquid will start boiling more easily, leading to an improved heat transfer. The patent application further teaches that subsequent membrane distillation modules need to be pressure-wise isolated from each other. One such isolation is needed in a distillate connection, into which distillate flows through the distillate outputs of the distillation modules. This isolation is embodied, in accordance with WO-A-2007/054311 by means of siphons.

It has been found, in tests with the membrane distillation system such as shown in Fig. 5 of WO-A 2007/054311, and implemented with frames in accordance with WO-A 2010/0127818 that start up of the system is rather difficult, and may give rise to large pressure deviations relative to the pressure foreseen in each of the distillation modules. The problem resides in the coupling of the stages: the vapour required to ensure evaporation of liquid in the second distillation module, is generated in the first distillation module only. Hence, it will take some time before evaporation will start. However, also the underpressure depends on the evaporation of liquid. As a consequence of the pressure deviations, the pressure in the system may get out of the operation range, leading to leakage, malfunctioning and lifetime reduction.

### Summary of the invention

It is therefore an object of the invention to provide an improved membrane distillation system of the type mentioned in the opening paragraphs, which can be started up more easily.
It is a further object of the present invention to provide a method of starting up such a membrane distillation system and to achieve effective use of the thus improved system.
In accordance with a first aspect of the invention, a membrane distillation system is provided that comprises a plurality of membrane distillation modules that are pressure-wise coupled in series, such that - in use - each subsequent membrane distillation module operates at a lower pressure than a preceding membrane distillation module, at least one of which membrane distillation modules comprises:
- A liquid channel with a fluid entry and a fluid exit and a hydrophobic, vapor permeable membrane through which - in use - evaporated liquid may pass;
- A vapor space adjacent to the liquid channel and separated therefrom through the hydrophobic, vapor permeable membrane, through which - in use - evaporated liquid may pass into the vapor space,
- A vapor channel coupled to a vapor space and comprising a condensation wall and a distillate exit for a distillate generated - in use - by means of condensation of the evaporated liquid,
Characterized in that said distillate exit in said membrane distillation module is provided with a further liquid-permeable membrane means between said membrane distillation module and a distillate collector unit, said liquid-permeable membrane means being duckbill valves or hydrophilic micro- or ultrafiltration membranes, said membranes having a pore diameter in the range of 0.2-50 µm.

It has been found in investigations leading to the present invention that start up of the system can be smoothened in that the distillate exit of the membrane distillation module is provided with a fluid-permeable membrane means in the form of duckbill valves or hydrophilic membranes for micro- or ultrafiltration. More precisely, these fluid-permeable membrane means allows the distillate to pass, but ensures a pressure difference between a distillation module and the distillate collector unit. In order to ensure the pressure difference the membrane means preferably act as a substantial gas stop. However, a certain leakage appears acceptable, particularly if a minor water column may be build up within the membrane distillation module. Since the pressure within a membrane distillation module tends to be different from the pressure in the membrane collector unit, a water column within the distillation module does not lead to significant artefacts, such as flashing as will be discussed hereinafter.

The invention is based on the insight that starting up becomes more complex due to the distillate connection. As long as there is no adequate amount of distillate, the distillate connection constitutes a channel between subsequent distillation modules, which is open for vapour. The distillate connection therefore constitutes a channel, through which pressure equalization occurs. Hence, the actual pressure build-up (i.e. generation of underpressures) is frustrated by the pressure equalization through the distillate connection.

The invention thus provides a significant improvement over the siphons used in WO-A 2007/054311. The exchange of siphons for membranes according to the invention led to a significant increase in start-up duration, and to the prevention of so-called "siphon-blowout". Herein, fluid in the siphon is blown out of the siphon as a result of a pressure difference between adjacent distillation modules that are coupled via the siphon. The siphon-blowout leads to pressure equalization between the adjacent distillation modules. Thereafter, the start-up needs to be repeated, unless the siphon-blowout damages the system so much that the system needs to be taken out of order. Such siphon-blowouts are believed to have anyhow a negative effect on lifetime of the system.

All of the membrane means according to the invention comprise a sheet of material, typically but not exclusively polymer, with channels suitable for liquid transport. In the embodiment of duckbill valves, the channels are merely opened if a sufficient pressure is exerted on the valves. The embodiment of membranes has the advantage of constituting excellent gas stops. These membranes are therefore most suitable for use in distillate exits over which a significant pressure difference is set, particularly the primary distillation modules. Surface area of membranes may be increased by selecting the shape of the membrane, i.e. for instance a cylindrical membrane rather than a planar membrane.

Membrane types suitable as fluid-permeable, gas-tight membranes in accordance with the invention are hydrophilic membranes for microfiltration and ultrafiltration. Suitably, use is made of a membrane of polymer material such as polyester, polyamide, for instance nylon, even though the use of inorganic materials is not excluded. Reference is made to the handbook of Marcel Mulder, Basic principles of membrane Technology (Kluwer, 1990), which specifies further details of such membranes and suitable materials therefore. Good results have been obtained with nylon membrane materials, which turn to have a beneficial combination of bubble pressure and permeability.

Preferably, the hydrophilic membrane has a bubble pressure of at least 0.20 bar (200 mbar), suitably above 0.25 bar and more preferably at least 0.50 bar. Membranes with such a bubble pressure have been found to operate appropriately. Furthermore, the liquid rate passing the membrane is suitably at least 20 liter per hour, more preferably 50-200 liters per hour at a pressure difference of ~50 mBar and an absolute pressure of 100 mBar. While it is most convenient to use a single membrane in a distillate exit, more than one membrane could be used instead. This will depend on volumes as well as possible membrane and/or design restrictions.

More preferably, the membranes have a pore diameter in the range of 1-50 µm, preferably 2-40 µm, more preferably 5-30 µm. It was found these pore diameters constitute an optimum. If the pore diameter is small, the surface tension due to capillary action limits fluid permeability of the membranes, and therewith the output of the system. If the pore diameter is too high, for instance higher than 50 µm, the bubble pressure is generally insufficient. It is not necessary that the same type of membrane is used in each distillate exit or each distillation module. Tests with the invention show that in the early distillation modules bubble pressure is the major requirement, whereas the fluid permeability is the major requirement in later distillation modules (i.e. those operated at a lower pressure, with typically a smaller pressure difference between adjacent modules). However, use of a limited number of membrane types, most suitably one or two, is deemed beneficial for robustness and manufacturing simplicity.

It is not excluded, particularly in a system with a plurality of distillation modules, that one or more siphons are used - instead of membrane means. This is particularly suitable for the later distillation modules, i.e. those operated at lower pressures, and preferably to the very last or the two last distillation modules. The advantage of a siphon is its large fluid permeability. Moreover, the start-up problems will be less big in such later distillation modules; e.g. sufficient distillate for filling the siphon and preventing siphon-blowout is more quickly generated in such later distillation modules with a lower pressure difference and a higher distillate volume. The use of a siphon in the last one or two distillation modules may be particularly beneficial, if the total number of distillation modules in series (each with a pressure reduction compared to the preceding module) is four or more. Clearly and alternatively, (hydrophilic) membranes may be provided in the distillate exits of earlier distillation modules, whereas other membrane means are applied in the distillate exists of later distillation modules.

In a first embodiment, the distillate collector unit comprises a distillate collector in which distillate from said membrane distillation modules is collected, and at least one connection between said distillate exits and said distillate collector. Use of a common distillate connection is deemed efficient from a physical layout perspective. Otherwise the distillate collector unit would become populated with pipes. Furthermore, the use of one or more common distillate connections turns out to be beneficial for heat exchange, as will be explained in the following.

It is observed for clarity, that a few common distillate connections could be used rather than a single one. This may be suitable in view of overall volumes, optimization of heat exchange and/or an efficient maintenance of underpressure. Moreover, more than a single distillate collector could be present. As will be explained further on, it appears beneficial that at least one distillate collector is operated at the same pressure as the pressure of the final membrane distillation module and/or a condenser coupled thereto. The pressure of the final module is lower than the pressure of the first module. Hence, distillate from the first module undergoes a pressure reduction when flowing to the distillate collector. However, the distillate needs to be brought to a higher pressure afterwards. Hence, if the number of membrane distillation modules becomes larger than two, it may become efficient to provide a low pressure distillate collector and a medium pressure distillate collector.

In a preferred embodiment, a condenser module is present, in which vapor from the preceding membrane distillation module is condensed, and coupled to the distillate collector. More particularly, an open connection is present between the distillate collector unit and the condenser, such that both are operated at the same pressure, and such that vapor generated in the connection of the distillate collector unit can flow away into the condenser for condensation.

In the tests leading to the invention, it has been observed that distillate starts boiling again in the distillate connection, or at least that part of the distillate evaporates. The use of an open connection between the distillate collector unit and the condenser allows the vapour to flow away, without leading to unexpected local pressure differences. The boiling may even occur in a vigorous manner known as flashing. In such a situation, the hydrophilic membranes will likely not anymore act as a gas stop. Their property as a gas stop is based on the surface tension of fluid in the membrane pores, also known as capillary action. The surface tension and cohesion within the fluid turns out strong enough to resist the presence of a pressure difference. The maximum pressure difference over the membrane is known as the bubble pressure. Normally the pressure in the distillate collector unit will be lower than the pressure in any of the distillation modules. Due to the vapour generation as a consequence of flashing, the pressure in the distillate collector unit may rise, so as to exceed the pressure in the distillation module. If this pressure increase leads to a pressure difference higher than the bubble pressure, the gas stop will open itself automatically, and will close again once the pressure difference has dropped below the bubble pressure. This temporal opening is considered as advantageous, as it allows to get rid of local and temporal pressure increase without destabilization of the system.

In a further embodiment, at least one heat exchanger is present between the distillate collector and a first of said hydrophilic membranes. The distillate leaving the distillation module through said hydrophilic membranes may be quite hot. Its temperature clearly depends on the temperature of the feed and the amount of heat transferred otherwise into the system - for instance by means of a separate heating circuit with which the feed in the first membrane distillation module is evaporated. Adding a heat exchanger turns out suitable, both to reuse available heat, for instance to preheat the feed, and to reduce the risk that the distillate starting boiling extensively or even vigorously. Heat exchangers are known in the art and are most effective when the stream to be warmed up and the stream to be cooled down flow in countercurrent direction. A heat exchanger coupled along said distillate connection is therefore deemed most beneficial, but alternatives are not excluded.

Preferably, the system of the invention comprises at least 3 membrane distillation modules in series, more preferably at least 4, and even more preferably between 4 and 15, such as between 4 and 10. It has turned out that such a number leads to an appropriate pressure decrease between subsequent modules with a minimum pressure that is not too low. If the minimum pressure gets too low, particularly below 40 mbar, it becomes more complicated and expensive to bring the distillate to atmospheric pressure. If the number of modules in series is too low, the distillate volume remains too low.

A single membrane distillation module may be provided with an extended membrane surface area by coupling several liquid channels and vapour spaces in parallel, as has been indicated in Fig. 2 of WO-A 2005/089914 and in Fig. 5 of WO-A 2007/054311, which disclosures are herein incorporated by reference. Alternatively, a single membrane distillation module may have a limited membrane surface area, i.e. in that the number of liquid channels in parallel is limited to 1 or 2. That enables that several membrane distillation systems may be used in parallel, suitably with a common condenser and distillate collector unit, as for instance known from WO-A 2010-0127819, which is herein incorporated by reference. It goes without saying that a parallel arrangement of system is not excluded when implementing a membrane distillation module with an extended membrane surface area.

In accordance with a second aspect of the invention, a method for starting up the membrane distillation system of the present invention is provided. This method does not need to comprise more steps than providing feed into the first distillation module and transferring heat to the feed and/or liquid evaporated therefrom.

It has turned out in preliminary experiments, that the temperature of the feed and/or the amount of heat transferred into the system is less critical. With the prior art system, it turned out necessary to limit the start-up temperature, particularly to less than 75 degrees Celsius, in order to limit or avoid siphon-blowout as much as possible. With the present system, such start up at reduced temperature turns out superfluous. This does not merely shorten the overall start-up duration, but also allows the use of hot feed. Such hot feed is available in many industrial operations. Reducing the temperature of such hot feed temporarily is not merely energy inefficient, but also leads to more complicated, less robust systems.

A further advantage of the starting up method in accordance with the invention is the overall reduction in start-up duration. Even if start up conditions is carefully controlled in prior art systems, the needed duration is easily 10 minutes per distillation module. This duration is needed for filling the siphon and thereafter for bringing the system under the desired steady state operation conditions. In accordance with the invention, start up duration of 1 minute per distillation module has been achieved. The reduction in start up duration allows efficient operation of both systems with a larger number of distillation modules in series (for instance 5 or more, wherein previously a start-up duration of more than 1 hour was needed), and also smaller scale systems (with an output less than the effective minimum of the prior art due to the siphons). Such small scale systems are deemed suitable for air-conditioning and for stand alone household applications. For air conditioning applications, a volume of for instance up to 100 liter/day (i.e. 1-4 liter/hour) is deemed suitable. For household applications, a volume of water in drink water quality of 100 liter per day may be sufficient, although volumes may higher, for instance up to 500 liters/day. Most suitably, the generated distillate is stored at reduced pressure, particularly a pressure lower than atmospheric pressure. The advantage of storage at reduced pressure is that risk of contamination of the distillate with bacteria and/or other microbiological contamination is reduced. Furthermore, such a system is preferably provided with reservoirs at different temperatures, so as to provide hot water for f.i. cooking, cold water for f.i. drinking and medium temperature water for f.i. washing, cleaning and the like. Such reservoirs with different temperatures are not merely beneficial for a user, but also, particularly in a hot and sunny environment, it tends to cost time to cool the distillate to a desired temperature. Hence, means and flows may be designed so as to ensure that water of a desired temperature is generated in a sufficient quantity. Thermostats for setting and controlling the desired temperature in a reservoir may be present.

A further advantage of small scale systems is that the energy required for the membrane distillation process and any preheating of feed and steam (in the steam riser) could be generated locally. Examples of local energy generation include for instance use of solar panels, biomass conversion, earth heat, wind energy and/or local combustion. Particularly a combination with solar panels is deemed beneficial. In one embodiment, such solar panels and the membrane distillation device is integrated into a single system. Such a single system particularly comprises one or more thermally isolated liquid reservoirs, such that solar energy may be used directly for preheating liquid, i.e. water. Suitably, a battery is provided for local storage of energy. Such energy can thereafter be used for the pumps.

For the avoidance of doubt, it is noted that the term 'start up' in the context of a present invention relates to start up of an empty system that has not been prefilled with water. Emptying the system, after a first start up, is not only deemed appropriate for maintenance, but is also relevant, so as to prevent infection of the warm water by microorganisms, and/or to ensure that deterioration of the distillate quality, i.e. for instance due to absorption of gaseous carbon dioxide (CO₂) that may affect the pH of the distillate.

In accordance with a third aspect of the invention, the membrane distillation system is used for water purification or as an air conditioning regenerator or part thereof, or for waste water concentration, or for other fluid purification applications. An air conditioning system on the basis of membrane distillation is for instance known from WO-A 2009/094032. While tests have been carried out with a system suitable for an aqueous feed, other embodiments of the system are envisageable.

### Brief description of the figures

These and other aspects of the invention will hereinafter be elucidated with reference to the Figures, which are purely diagrammatical and not drawn to scale, wherein:
Fig. 1 shows an architecture proposal of the membrane-distillation systems known from WO2005/089914A1;
Fig. 2 shows a schematical layout of the system of the invention;
Fig. 3 shows a functional architecture of the system of the invention, including heat and water flows;
Fig 4(a)-(c) shows three stages in the start up method of the invention;
Fig. 5(a)-(c) illustrates pressure equalization during start up in a first embodiment of the system of the invention.

### Detailed description of the invention

The Figures are not drawn to scale and are intended purely for illustrative purposes. Equal reference numerals in different figures refer to equal or corresponding parts.

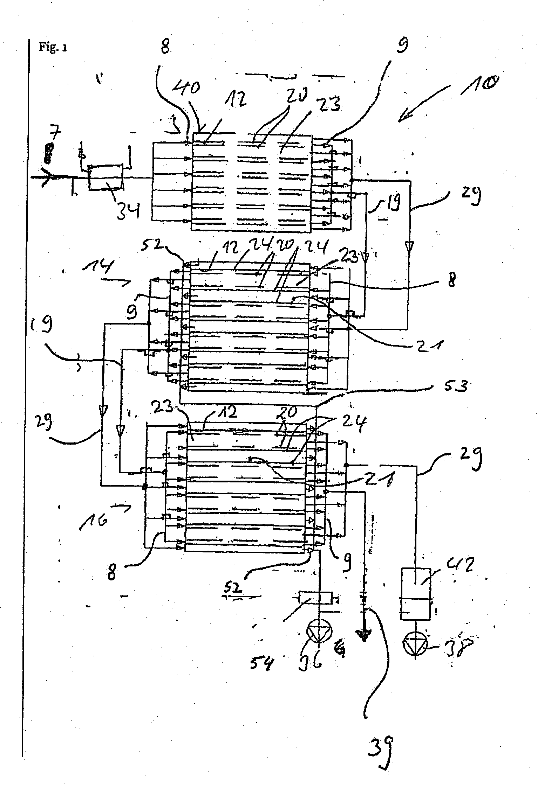

Fig.1 shows diagrammatically a general architecture as known from WO2005/089914A1. For sake of clarity, it is observed that this architecture is not different from architectures known in the prior art. As shown herein, the membrane distillation system 10 comprises a vapor generator module 40, a first membrane distillation module 14, a second membrane distillation module 16, a condenser module 42.

Liquid, i.e. particularly an aqueous solution or a fluid mixture, enters the system via a liquid line 7. It is optionally preheated in a heat exchanger 34. Thereafter, it enters the vapor generator module 40 at the fluid entry 8. Here the fluid runs in a liquid channel 12 and evaporates under the influence of the available heat, and subsequently leaves this vapor generator module 40 at the fluid exit 9 as a concentrated fluid. The fluid is thereafter led via a liquid connection 19 to the first membrane distillation module 14, which it enters at the fluid entry 8, runs through in liquid channel 12 and leaves at the fluid exit 9 as a further concentrated fluid. In order to ensure that distillation occurs, the pressure in the first membrane distillation module 14 is lower than that in the vapor generator module 40. Subsequently, the fluid is led through a liquid connection 19 to the second membrane distillation module 16, which it enters at the fluid entry 8, passes through liquid channel 12 and leaves through the fluid exit 9 as an even further concentrated fluid. This fluid is also known as brine and removed via brine exit 39.

Vapor is generated by means of distillation of the fluid. The vapor enters a vapor space 23 that is separated from the liquid channel 12 by means of substantially fluid-impermeable membranes 20. The substantially fluid-impermeable membranes 20 are particularly hydrophobic membranes. Evidently, if the fluid is non-aqueous but rather an organic liquid, the fluid-impermeable membranes will be chosen to be impermeable for said organic fluid. The generated vapor is led from the vapor space 23 to the vapour chamber of a subsequent module - in casu the first distillation module 14 - via vapour connection 29 and arrives in the vapour channel 21. The vapour channel 21 is provided with at least one condensation wall 24. The vapour will condensate at this condensation wall 24 and be converted into distillate. Simultaneously, heat generated in the condensation process is transferred to the liquid channel 12, which is located adjacent to the condensation wall 24. In the present embodiment, the vapour channel 21 is bound by two condensation walls 24 on opposite sides. While being advantageous, this is not strictly necessary.

Liquid evaporating from the liquid channel 12 in the first membrane distillation module 14 enters the vapor space 23 through said hydrophobic membranes 20, and flows through vapour connection 29 into the vapour channel 21 of the second membrane distillation module 16. Liquid evaporating from the liquid channel 12 in the last membrane distillation module - in this embodiment the second membrane distillation module 16 - enters the vapor space 23 through hydrophobic membranes 20, and flows through vapour connection 29 into the condenser unit 42. It is therein converted into liquid and thereafter brought to a desired pressure (typically a higher pressure) by means of pump 38 (typically a vacuum pump). Instead of being led away as a separate liquid stream, the condensate from the condenser 42 may be added to a distillate collector.

Distillate is collected in a distillate collector 54, from which it is pumped to a higher pressure using a vacuum pump 36. The distillate collector 54 is coupled to the distillate exits 52 of the first and second membrane distillation modules 12, 14 via a (distillate) connection 53.

This general architecture may be implemented in suitable manner, so as to optimize yield (i.e. amount of distillate) and robustness. The heat generator 40 may for instance be embodied as a steam riser circuit. In this case, the heat is transferred to the vapour generator 40 in the form of vapour (particularly steam). A distillate is then also formed in the vapour generator 40, which is however fed back into the steam riser circuit, rather than to the distillate collector 54. The fluid line 7 may be guided through the condenser unit 42 for preheating. The number of fluid channels 12 in parallel within one module 40, 14, 16 may be specified on the basis of the intended distillate volume. While the number of fluid channels 12 is the same in each module 40, 14, 16 of the present embodiment, this is not necessary. While the present embodiment shows a design wherein the vapour space 23 and the vapour channel 21 are mutually coupled through an external vapour connection 29, this is not necessary. Alternative embodiments are envisageable wherein the vapour space 23 and the vapour channel 21 are merged into a "vapour channel space". In such case, the vapour channel space is suitably bounded on one side by a membrane 20 and on the opposite side by a condensation wall 24.

Fig. 2 shows schematically the system of the invention, in a first embodiment. The individual distillation modules 14, 16 are shown here, each with a distillate exit 52. All distillate exits 52 of this embodiment are coupled to a distillate collector 54 via a distillate connection 53. The distillate connection 53 and the distillate collector 54 jointly constitute a distillate collector unit 55. The distillation modules 14, 16 as well as the condenser unit 42 are shown herein as modules of comparable design and are suitably embodied on the basis of frames as known from WO2010/127818A1. While merely two distillation modules 14, 16 are shown, it is not excluded that the system comprises a plurality of such membrane distillation modules. In this embodiment, the distillate collector 54 is provided with an output via pump 36. The condenser unit 42 is provided with an output via pump 38. The pressure in the condenser unit 42 and the distillate collector 54 can herein be brought at equal levels by means of the valve 37. Other implementations than a valve 37 are readily envisageable.

Fig. 2 shows furthermore the liquid line 7 that enters the system 10 in the vapour generator module 40, as well as the liquid connection 19, vapour connection 29 and the brine exit 39. The vapour generator module 40 is in this embodiment implemented as a steam riser circuit, comprising a heat exchanger 140 and a recirculation circuit 41. Under steady state, the operation is such that the pressures P₁, P₂, P_{cond} and P₀ of the first and second membrane distillation modules 14, 16, the condenser unit 42 and the distillate collector 54 respectively are decreasing, i.e. P₁ > P₂> P_{cond} ≥P₀. It is observed for clarity that the pressure is defined as the pressure in the vapor space of a distillation module. The pressure in the vapour channel (that is coupled with the vapor space in the preceding module) may be higher.

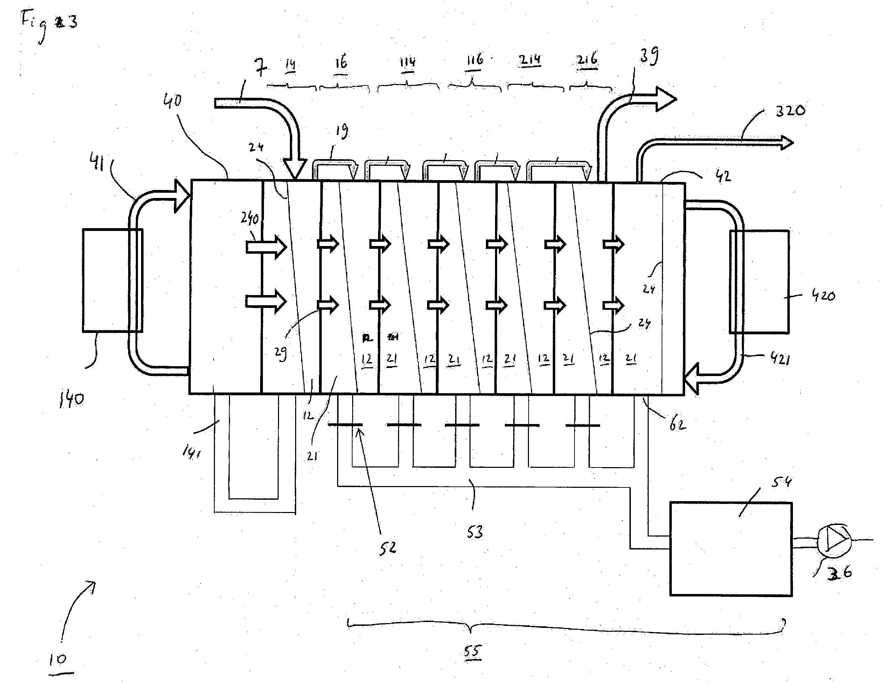

Fig. 3 shows a further embodiment in accordance with the invention, which is improved over the embodiment shown in Fig.2. According to this embodiment, six distillation modules 14, 16, 114, 116, 214, 216 are present. Such larger plurality of distillation modules allows an increase in yield. The said plurality of distillation modules is placed in series, resulting in a pressure decrease from module to module. Fig. 3 shows the construction of the individual modules schematically: liquid channels 12 are shown that are mutually coupled by means of liquid connections 19. Though not indicated in the Fig 3, the liquid channels 12 and the liquid connections 19 typically constitute a continuous channel. Fig. 3 furthermore shows the vapour channels 21 and the vapour connections 29 from the previous distillation module into the vapour channel 21. The hydrophobic membrane and the vapour space have been left out for purposes of clarity of the figure. A condensation wall 24 is present between a vapour channel 21 and a liquid channel 12. It will be understood that the vapour arriving in a distillation module over the vapour connection condensates against the condensation wall 24 and will leave the module as distillate at the distillate exit 52. The heat generated in the condensation process is reused for heating and particularly evaporating liquid in the liquid channel 12.

The distillation modules 14, 16, 114, 116, 214, 216 are present between a heat generator 40 and a condenser unit 42. The heat generator 40 is of the steam riser type, wherein the heat is transferred to the feed 7 in the first distillation module 14 by means of steam (transported to the first distillation module 14 by means of a steam connection 240). The steam will condensate against condensation wall 24, and be recirculated into the heat generator by means of water connection 141. In order to keep the steam flow through steam connection 240 constant, a heat circulation circuit 41 with a heat exchanger 140 is present.

The condenser unit 42 is provided with a cooling circulation circuit 421 with a heat exchanger 420. The condensation wall 24 in the condenser unit 42 is not only intended for condensation of any rest vapour arriving in the condenser unit 29. The condensation wall 24 is furthermore a heat transfer device, with which the temperature in the condenser unit 42 may be set. As is apparent from the laws of thermodynamics, temperature and pressure are directly coupled to each other. Moreover, a specific boiling pressure is coupled to a boiling temperature. Hence, in order to ensure proper operation of the series of distillation modules 14, 16, 114, 116, 214, 216, the temperature is preferably well defined by means of the cooling recirculation circuit 421. Furthermore, the low pressure is set by means of the vacuum connection 320, which is suitably coupled to a vacuum pump (not shown).

In the embodiment shown in Fig. 3, the condenser unit 42 is provided with an exit 62 leading to the distillate collector unit 55, rather than a separate output with a pump such as shown in Fig. 2. It has been observed by the present inventors that such coupling of the condenser unit to the distillate collector unit 55 in combination with the use of membranes in the distillate exits has major advantages for the start up.

In a variation of the embodiment shown in Fig. 3 (not shown), a separate vacuum channel is present between the condenser and at least some of the membrane distillation modules and preferably all of the membrane distillation modules. One single channel with branches to the individual distillation modules is appropriate, though it is not excluded than more than one channel is provided. Such vacuum channel could furthermore extends to some of the membrane distillation modules rather than to all of them. An advantage of such vacuum channel is the direct and immediate pressure equalization, in so far as the temperature in each of the connected membrane distillation modules is equal.

In a further variation, means are present for removal of non-condensable gases from the vapour channels. Non-condensable gases could reduce the efficiency of the membrane distillation process. Moreover, if the concentration of gases becomes too high in the course of time, a minimum amount could again be dissolved in the distillate. This is evidently particularly relevant in case of generation of distillate (i.e. water) with a high grade of purity. Examples of means of non-condensable gases include a vacuum channel as discussed hereabove and coupled to the condenser, a separate channel that is provided with a valve for (batch-wise) removal of non-condensable gases, or a membrane type closure enabling selective transmission of such non-condensable gases, for instance in the form of a hydrophobic membrane. Particularly such removal means are located at a top side of the vapour channel.

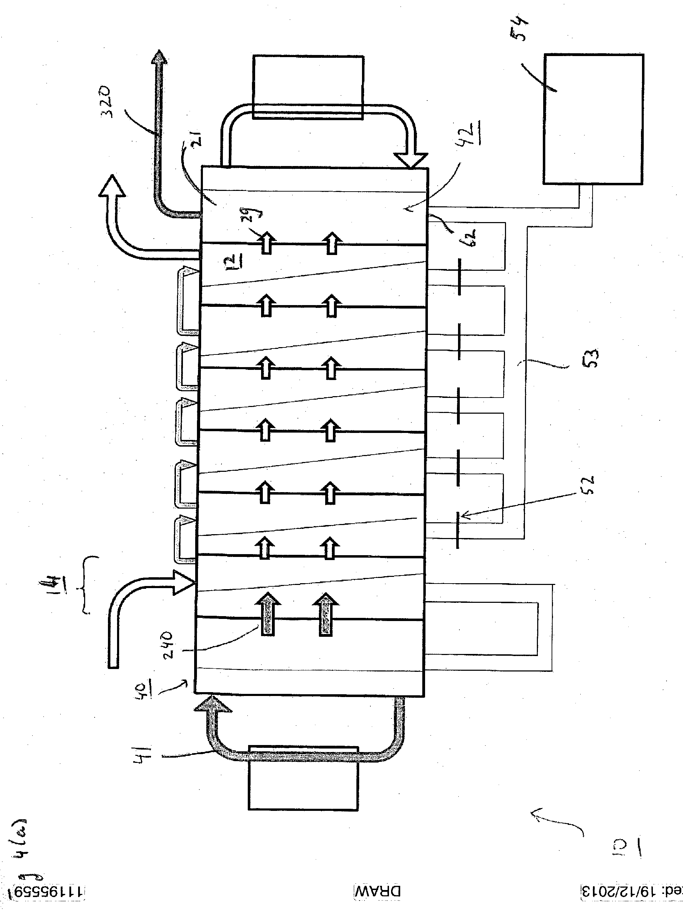

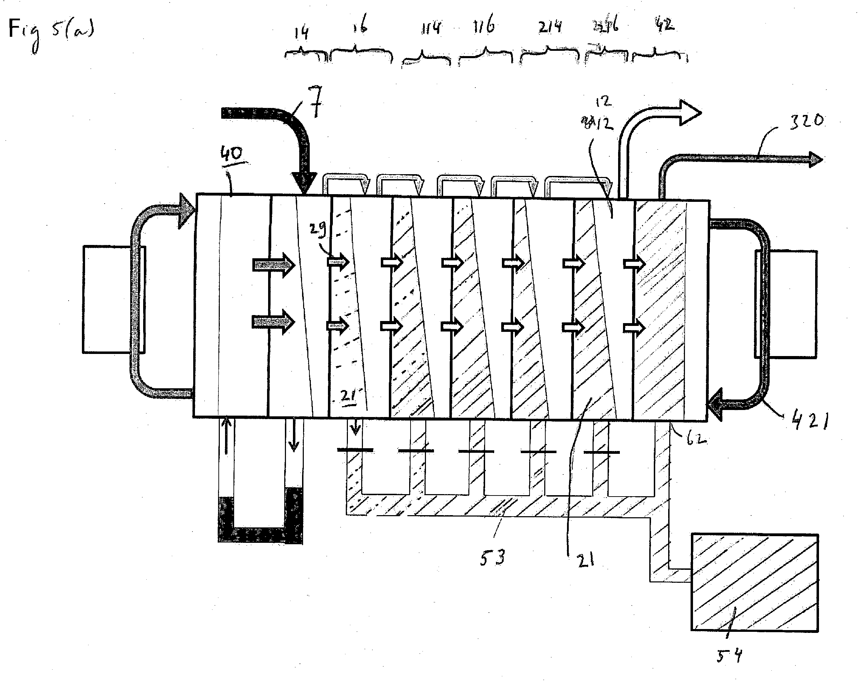

The start up procedure will now be explained with reference to Fig. 4(a)-(c), and Fig. 5(a)-(c). For sake of pictorial simplicity, the reference numerals have been omitted as much as possible. However, as will be clear, the system features are identical to those shown in Fig. 3, and will be referred to as shown in Fig.3.

Fig.4 (a) shows the first stage in the method and system in accordance with the invention. Herein, the heat generator 40 is turned on, and the pressure is reduced in the condenser unit 42 by means of vacuum means 320. The heat generator 40 will produce steam that is transported into the first membrane distillation module 16 through the steam connections 240. These steam connections 240 are suitably embodied as connecting channels; it is however not excluded that the heat generator 40 is integrated with the first membrane distillation module 14, so as to obtain a continuous space filled with steam. Furthermore, stirring means and other convection means may be present so as to obtain sufficient flow of steam towards the adjacent condensation wall 24. The transfer of steam results in heating of the first membrane distillation module 16, such that any feed, when entering can be heated further. In one embodiment, the feed is prepared to enter at a temperature between 70 and 85 °C, and is further heated by means of the steam to a temperature near to the boiling temperature.

The reduction of pressure by means of the vacuum means 320 typically spreads into the complete system. This is for instance achieved, in that the vapour channel 21 of the condenser 42 is in direct contact through the vapour connections 29 with the liquid channel 12 of the preceding membrane distillation module. Because the liquid channel 12 is not yet filled with feed, the pressure will be reduced not only in the condenser unit 42, but also in the preceding membrane distillation modules 14, 16, 114, 116, 214, 216. Moreover, in accordance with the present embodiment, the pressure will also be reduced in the distillate collector 54 and the distillate connection 53, which are coupled to the condenser unit through exit 62. A typical pressure specified at the vacuum means is for instance 80 mbar. The pressure may be reduced in the full system, when starting at 1 bar, however with a delay. This delay is due to the available length of tubes and channels of the system. Moreover, the heating of the first membrane distillation module 14 will counteract the pressure reduction, since, for gases, pressure and temperature are mutually related.

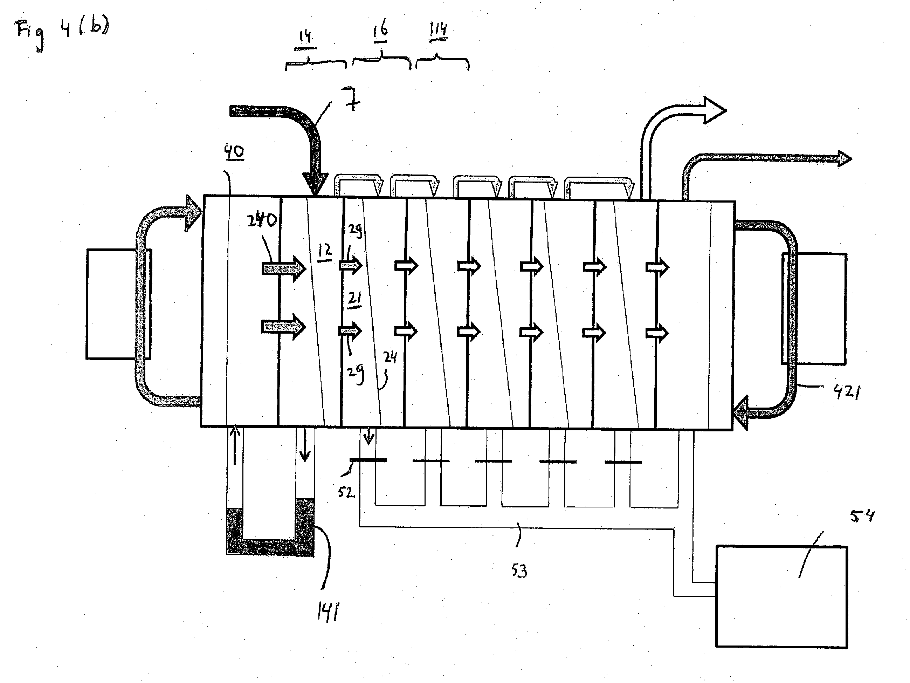

Fig. 4(b) shows a second stage in the method of starting up the system. Two further actions have been taken: cooling recirculation 421 was started up, so as to ensure cooling of the condenser 42, and feed 7 is allowed to enter the first membrane distillation module 14. The feed 7 will herein be further heated with the steam transferred through the steam connections 240 from the heat generator 40. Dependent on the temperature of the feed 7, said heating up results after shorter or longer period in evaporation of feed 7 in the liquid channel 12. The generated vapour is transferred by means of vapour connections 29 into the vapour space 21 of the second membrane distillation module 16. This vapour transfer will most probably result in a pressure increase. It will anyhow end any pressure reduction in the second membrane distillation module 16 as driven by the vacuum means 320. For sake of clarity, it is observed that any pressure equalization via the liquid channel 12 ends, when the feed 7 fully fills the liquid channels 12 in the subsequent membrane distillation modules 14, 16, 114, 116, 214 and 216.

As a result of condensation of the vapour in the vapour space 21 of the second membrane distillation module 16 against the condensation wall 24 therein, distillate will be formed. This distillate leaves the second membrane distillation module 16 through the distillate exit 52 in which, in accordance with a primary embodiment of the invention, a hydrophilic membrane is present. The distillate will wet the hydrophilic membrane. More precisely, the distillate will wet any surfaces in capillaries present within the membrane. As a result thereof, vapour cannot pass the membrane any longer. The vapour space 21 of the second membrane distillation module 16 therewith is isolated, pressurewise, from vapour spaces 21 of further membrane distillation modules and the distillate collector 54. As a result, the pressure in the vapour space 21 of the second membrane distillation module 16 will obtain its optimal value smoothly.

In accordance with the prior art as disclosed for instance in WO2005/089914A1, a siphon was present between the distillate exit of the second membrane distillation module 16 and the distillate exit of the subsequent membrane distillation module 114. There, the problem was encountered that due to the low pressure set by the pump coupled to the distillate collector 54 (see Fig. 2), the distillate would start to boil again, particularly after a volume of distillate had been collected in a siphon within the distillate connection. This would lead, rapidly, to a pressure increase, and the vapour would flow away in all possible directions, including the vapour spaces of further membrane distillation modules. As a result, the pressure build up would be destroyed completely, and a rather chaotic, unpredictable start up would occur.

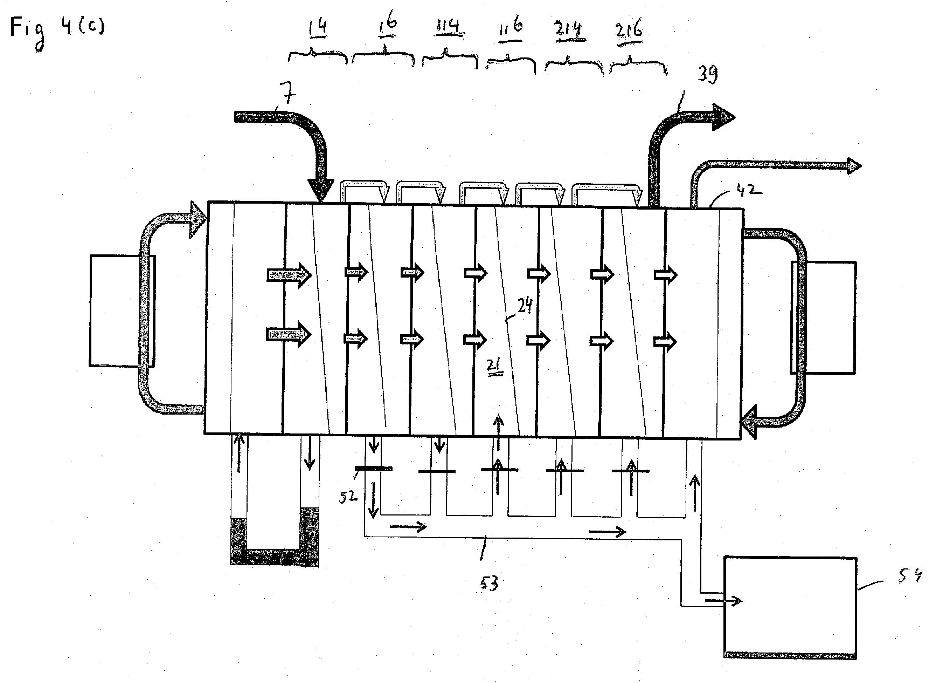

This problem is solved in accordance with the present invention. This is illustrated in Fig. 4(c). Fig. 4(c) shows the system 10 in a further stage of the start up. At this stage, the feed flow 7 has proceeded so far that a concentrated waste flow 39 - also known as brine - leaves the system 10. This brine flow 39 comprises for instance a concentrated salt solution in case that the feed 7 is sea water. If the feed 7 is water in general, such as rain water or even tap water, while the distillate is intended as demineralized water, the concentrated waste flow 39 contains water with a relatively high content of minerals and the like. Alternatives will be apparent to the skilled person.

As shown in Fig. 4(c), the distillate directly flows into the distillate collector 54 via the distillate connection 53, which is most suitably embodied as a tube in which liquid flow is not substantially hampered. The distillate connection 53 for instance comprises a substantially straight tube, or a tube that at least partially is oriented downwards, so as to make use of gravity. Particularly, the tube is designed so as to prevent "dead water zones", i.e. locations where distillate would collect rather than continue to flow. Hence, distillate enters the distillate collector 54 already during start-up, which is different from the prior art, where the distillate collector only got filled after the start up, and after filling all siphons present within the distillate connection 53.

A side effect of such more direct connection, as well as the use of membranes in the distillate exit 52, is a volume reduction of the system. Moreover, since portions external to the distillation modules in the system are minimized by means of the present invention, the system overall becomes more easily configurable in space, i.e. units may be stacked more easily so as to arrive at a higher throughput per hour. Larger throughputs are particularly relevant for industrial applications. Particularly, a system may be designed comprising several subsystems, each having a series of membrane distillation modules.

Moreover, as further shown in Fig. 4(c), to the extent that the distillate evaporates again (which is reduced to improved flow to the distillate collector 54), distillate vapour will enter the further distillation modules 114, 116, 214, 216 and optionally the condenser unit 42. This has several effects that are considered neutral or even advantageous: first, the vapour is not lost, but will again be condensated against the condensation wall 24. Secondly, the transfer of vapour into the further distillation modules 114, 116, 214, 216 effectively contributes to setting the correct pressure in said distillation modules and therewith to shortening the start up. Thirdly, the additional cycle of evaporation and condensation does not lead to energy loss, but rather to heat transfer from the distillate connection 53 into the relevant distillation module (evaporation costs energy, condensation liberates energy). This energy transfer is actually beneficial rather than undesired.

The effect on shortening the start up will now be explained in more detail. As mentioned above, the start up process starts with pressure reduction, which also extends to the further distillation modules 114, 116, 214, 216. Hence, at the time feed starts evaporating into the corresponding vapour spaces, the pressure is reduced. The evaporation will lead to a pressure increase. Only after sufficient pressure increase and vapour transfer, vapour will condensate against the condensation wall 24 so as to form distillate. After a minimum amount of distillate is formed, the distillate exit 52 will be converted into a pressure stop. The pressure in the distillation module may then be fine-tuned (which tends to happen by itself).

Now, distillate evaporating in the distillate connection 53 and entering a further distillation module 114, 116, 214, 216 increases the amount of vapour in said distillation module. Hence, the thermodynamical limit of maximum vapour in said distillation module will be reached earlier, and distillate formation will be accelerated. This leads to an accelerated closure of said distillation module. Moreover, vapour entering the distillation module effectively increases the pressure in said distillation module slightly. Such little and gradual pressure increase brings the pressure nearer to the intended optimum. It will not be any pressure increase such that the intended optimum is passed, as was the case in the prior art leading to chaotic behaviour. A final effect is based thereon that vapour flow chooses the easiest connection. This will be an optimum between the nearest connection and the lowest pressure, which optimum likely shifts in the course of starting up. The nearest connection is a distillation module "earlier" in the series which thus operates - in equilibrium - at a higher pressure. Hence, it is beneficial that more vapour enters such earlier distillation module in view of the intended pressure increase.

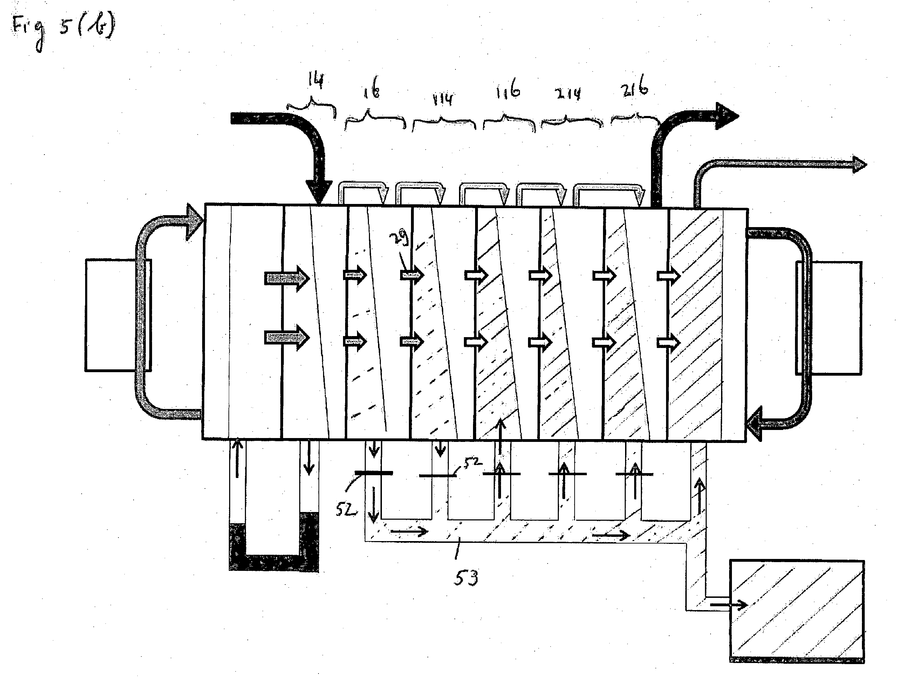

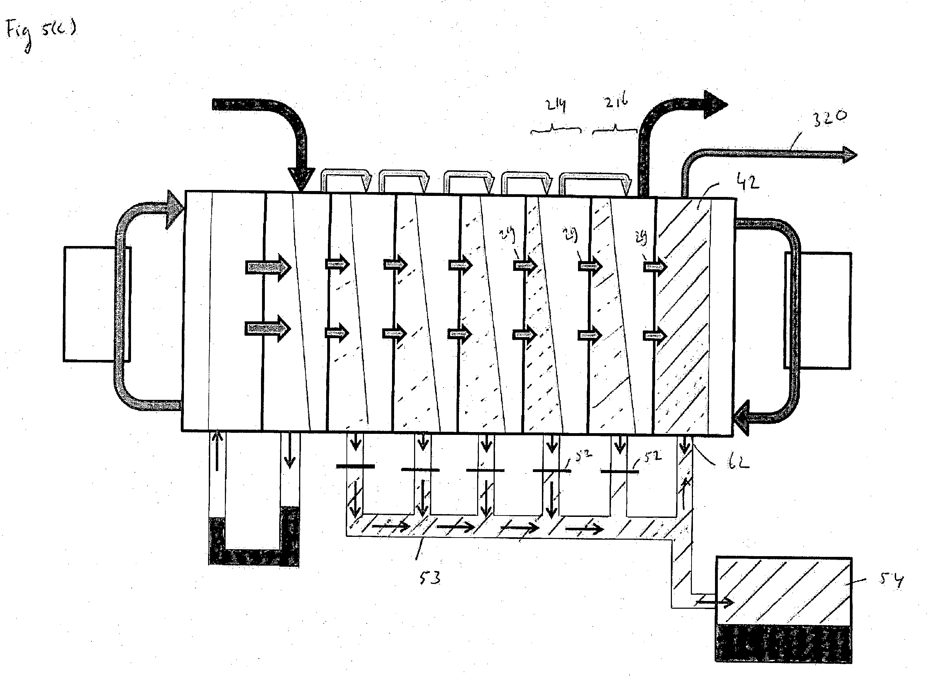

Fig. 5(a) shows a system situation corresponding to the stage shown in Fig. 4(b). Fig. 5(b) shows a system situation corresponding to the stage shown in Fig 4(c). Fig. 5(c) shows a situation of a further stage, i.e. where the start-up is essentially completed. These Fig. 5(a)-(c) are provided so as to illustrate the setting of the relative pressures in the different distillation modules. These pressure settings furthermore identify an advantage of the specific embodiment depicted, wherein the condenser unit 42 is coupled with its exit 62 to the distillate collector unit 55, and particularly to the distillate connection 53, that is coupled to several distillation modules 14, 16, 114, 116, 214, 216. This coupling of the condenser unit 42 and the distillation modules leads to a further improvement in pressure setting during start-up. Compared to the pressure equilization via the liquid channel 12, the coupling via the distillate connection 53 has the advantage that the latter remains opened during a longer period, and furthermore may be a shorter connection from the condenser unit (and the vacuum means 320 coupled thereto) to 'early' distillation modules 14, 16, 114.

In Fig. 5(a)-(c) pressure reduction is indicated by means of shading the relevant vapour channels 21, the distillate collection 53 and the distillate collector 54. Liquid channels 12 have been left blank for purposes of pictorial clarity. Shading by means of continuous lines represents a larger pressure reduction than shading by means of dotted lines. The distribution of pressure in the system of the invention is merely indicative.

More particularly, Fig 5(a) shows the situation after starting up the heat generator 40, reducing the pressure by means of the vacuum means 320, adding feed 7 and turning on the cooling liquid recirculation 421. As indicated above, the pressure will be reduced not only in the condenser unit 42, but also in the preceding distillation modules 16, 114, 116, 214, 216, the distillate connection 53 and the distillate collector 54. Pressure reduction in the first and second distillation modules 14, 16 will be reversed because of start of evaporation. As a consequence hereof, vapour has been transferred to the vapour channel 21 of the second distillation module 16 through vapour connection 29. The pressure reduction is rather extensive throughout the further distillation modules 114, 116, 214, 216, in view thereof that two separate channels for pressure equalization are present during start up: the distillate connection 53 and the -not yet filled - liquid channel 12 (and optionally a further separate vacuum channel). Still, the pressure in earlier, upstream distillation modules may be slightly higher (less pressure reduction), which will depend on the efficiency of the channels for pressure equalization and the power of the vacuum means (particularly a vacuum pump). This is however a matter of design and use, for instance related to the choice of the features of a vacuum pump, and to the specific start up programme. However, as will be clear in the following, there is no need to achieve lowest possible pressures throughout the system. Differences in temperature appear irrelevant as long as liquid channels and vapour channels in the individual membrane modules are not filled adequately.

Fig. 5(b) shows the relative pressure distribution in a second stage of the start up method of the system of the invention. At this stage the vapour channel 21 of the third membrane distillation module 114 has been filled. Moreover, distillate has entered the distillate connection 53 from the second distillation module 116, and arrives at the distillate exit 52 of the third distillation module 114. Evaporated distillate enters particularly the fourth distillation module 116.
The resulting pressure distribution at a stage merely halfway the start up of the system turns out to be in line with the intended final situation: the second distillation module 16 is pressure-wise closed (membrane 52 acts as a pressure stop). The pressure in the third distillation module 114 has increased relative to the initially set reduced pressure due to inflow of vapour. The pressure in the fourth distillation module 116 has somewhat increased due to the inflow of evaporated distillate. In view of the evaporation of distillate and the still open membranes 52, the pressure in the distillate connection 53 also has increased relative to the preceding situation.

Fig. 5(c) shows the pressure distribution after completion of start up. This is clear in that all vapour connections 29 now transport vapour to a subsequent vapour channel. A most important change is that the pressure in the distillate connection 53 now is reduced again to a level comparable to that in the condenser unit 42, as set by the vacuum means 320. Here the condenser unit 42 starts to have the function as 'overflow unit': any increase in distillate formation that would lead to evaporation can be equalized in that vapour leaves to the condenser unit 42. Particularly high volumes of distillate were obtained from the last distillation modules 214, 216. Implementation of a siphon as a temporary buffer in addition to the membrane 52 in the exit is envisaged.

The presence of a coupling between the condenser unit 42 and the distillate connection 53 thus has following advantages: first it supports pressure reduction in the full system prior to feed entry, in view thereof that it constitutes a short pathway and because low pressure arrives now at the distillation modules from two different sides. Secondly, the coupling between condenser unit 42 and the distillate connection 53 prevents the generation of a pressure difference between distillation modules and condenser on the one hand, and distillate connection and distillate collector on the other hand. Thirdly, the coupling allows evaporation of a distillate overflow at the end of start up and also during stationary use, making the system more stable and robust.

Furthermore, it has been found that a system with such connection between the condenser exit and the distillate collector unit 55 may be used for setting an output volume of the system. This may be achieved by changing the conditions in the condenser. More particularly, it has been found that the cooling flow of the condenser may be used to drive the temperature in the condenser, and therewith to interrupt or reduce the output volume of distillate. It has turned out that the effective energy loss in the steam riser is small. This is believed to be due thereto, that no significant amount of heat is transferred from the steam riser into the first distillation module 14. Herein, flow of feed through the system is not interrupted. Preferably, a coupling is provided such that preheated feed may be recirculated; such coupling is particularly opened by means of a valve in a situation of interruption.

### Example 1

Preliminary tests on a simple test set-up were done to prove the principle. A hydrophilic membrane, available at Philips was used for the test. With a 0.45 micron MF-Millipore membrane (type HA) of 45 mm diameter, it was shown that the wetted membrane is gas tight at least up to P > 950 mBar (50 mBar on vacuum side of membrane, atmospheric at opposite side). This was expected because stated bubble point is 2.1 Bar. The liquid rate at a P of 100 mBar and 50 mBar at vacuum side was ~4.5 l/hr, for the membrane surface area of ~15 cm².

### Example 2

A nylon membrane supplied by General Electric with a pore size of 10 micron was tested in a system as shown in Fig. 3 designed for an out put volume of 1 m³/day. The surface area of the membrane was 15 cm². The membrane was applied in each membrane distillation module. Pressure differences between the membrane distillation modules were built up smoothly, without flashing issues. Once started up, the process as a whole ran stable. In the test, the output of the sixth membrane distillation module turned out limited by the membrane permeability and surface area.

### Example 3

A miniature, self-actuating duckbill valve as supplied by Minivalve International (Oldenzaal, the Netherlands), type DU.039.005 SD with a diameter of 3.9 mm, was used as a membrane in a test setting comprising a pipe on top of the membrane. Pressure difference over the membrane could be set. Duckbill valves are valves, manufactured from rubber or synthetic elastomer, and shaped like the beak of a duck. These are commonly used in medical applications to prevent contamination due to backflow. Herein, one end of the valve is stretched over the outlet of a supply line, conforming itself to the shape of the line, usually round. The other end, the duckbill, retains its natural flattened shape. When a fluid is pumped through the supply line and therefore the duckbill, the flattened end opens to permit the pressurized fluid to pass. When pressure is removed, however, the duckbill end returns to its flattened shape, preventing backflow. As apparent from the experiment, a sufficient distillate flow was achieved with the duckbill valve. It turned out particularly suitable to ensure presence of a water column above the minivalve, so as to guarantee the pressure difference.

### Comparative Example

A system similar to the system of Fig. 3 was constructed, wherein the membranes at the distillate exit were replaced by siphons. Upon start up, the system (including the siphons) were empty. The steam riser was switched on, so as to achieve a working temperature of 75 °C. Pressure was reduced simultaneously by means of vacuum means, but such that the working temperature of 75 °C was reached prior to arriving at the intended vacuum pressure; the specified condenser pressure was 70 mbar. Subsequently, feed was applied. Flashing occurred in all siphons of all the membrane distillation modules. The intended system vacuum pressure (i.e. corresponding to the specified condenser pressure) was not reached, and flashing continued. Virtually no distillate was collected in the distillate collector. After 30 minutes, condenser pressure was increased to 120 mbar, so as to terminate flashing. Thereafter, a new start up of the system had to be undertaken.

## Claims

1. A membrane distillation system (10) comprising a plurality of membrane distillation modules (14, 16) that are pressure-wise coupled in series, such that each subsequent membrane distillation module (16) can be operated at a lower pressure than a preceding membrane distillation module (14), at least one of which membrane distillation modules (14, 16) comprises:
- A liquid channel (12) with a fluid entry (8) and a fluid exit (9) and a substantially hydrophobic, vapor permeable membrane (20) through which evaporated liquid may pass;
- A vapor space (23) adjacent to the liquid channel (12) and separated therefrom through the hydrophobic, vapor permeable membrane (20), through which evaporated liquid may pass into the vapor space (23),
- A vapor channel(21) coupled to a vapor space (23) and comprising a condensation wall (24) and a distillate exit (52) for a distillate generated by means of condensation of evaporated liquid from said vapor space (23),
**characterized in that** said distillate exit (52) in said membrane distillation module (14, 16) is provided with a further liquid-permeable membrane means (52) between said membrane distillation module (14, 16) and a distillate collector unit (55), said liquid-permeable membrane means (52) being hydrophilic microfiltration or ultrafiltration membranes with a pore diameter of 0.2 to 50 µm or duckbill valves.

2. The membrane distillation system (10) as claimed in claim 1, wherein the distillate collector unit (55) comprises a distillate collector (54) in which distillate from said membrane distillation modules (14,16) is collectable, and at least one connection (53) between said distillate exits (52) and said distillate collector (54).

3. The membrane distillation system as claimed in any one of the preceding claims, wherein
- the plurality of membrane distillation modules (14, 16, 114, 116, 214, 216) is at least three;
- a second distillate collector unit is present in addition to the-first-distillate collector unit (55), and
- a first and a second (14, 16) of said membrane distillation modules (14, 16) is coupled via their distillate exit (52) to the first distillate collector unit (55) and a third (114, 116, 214, 216) of said membrane distillation modules is coupled via its distillate exit to the second distillate unit.

4. The membrane distillation system as claimed in any of the preceding claims, wherein the membrane distillation module (16, 116, 216) operated at the lowest pressure is coupled to the distillate collector unit (55) via a siphon.

5. The membrane distillation system as claimed in any of the preceding claims, wherein at least one heat exchanger is present between the distillate collector (54) and a first of said liquid-permeable membranes (52).

6. The membrane distillation system as claimed in claim 4, wherein the connection (53) of the distillate collector unit (55) is provided with a plurality of inputs coupled to said distillate exits (52), and wherein said heat exchanger extends along said connection, particularly in a countercurrent flow direction.

7. The membrane distillation system as claimed in claim 1 to 5, further comprising a condenser module (42), in which vapor from the preceding membrane distillation module (16, 116, 216) is condensed, and coupled to the distillate collector (54).

8. The membrane distillation system as claimed in claim 6, wherein an open connection is present between the distillate collector unit (55) and the condenser (42), such that both can be operated at the same pressure, and such that vapor generated in the connection (53) of the distillate collector unit (55) can flow away into the condenser (42) for condensation.

9. The membrane distillation system as claimed in claim 1, further comprising a steam riser circuit (40) comprising a heat exchanger, in which fluid in the steam riser circuit can be heated up by means of rest heat from other systems.

10. Use of the membrane distillation system as claimed in any of the preceding claims for water purification, wherein the fluid entering the liquid channel at the fluid entry is an aqueous solution, and wherein the distillate collector comprises distilled water or potable water.

11. Use of the membrane distillation system as claimed in any of the preceding claims 1-8 as an air conditioning regenerator system wherein the liquid is a hygroscopic solution, which for instance comprises a LiCl salt, said liquid being regenerated in the distillation system and subsequently recirculated into the air conditioner.

12. A method of starting up a membrane distillation system as claimed in any of the preceding claims 1 to 8.

13. The method as claimed in claim 12, wherein feed enters a first membrane distillation module (14), upon which the hydrophilic membrane (52) of the distillate exit of the first membrane distillation module (14) gets filled and starts acting as a gas stop, upon which a vapor flow from the first into the second membrane distillation module (16) is generated.

## Patentansprüche

1. Membrandestillationssystem (10) umfassend eine Mehrzahl von Membrandestillationsmodulen (14, 16) die druckweise in Reihe geschaltet sind, sodass jedes nachfolgendes Membrandestillationsmodul (16) bei einem niedrigeren Druck als ein vorangegangenes Membrandestillationsmodul (14) arbeiten kann, wobei wenigstens eines der Membrandestillationsmodule (14, 16) umfasst:
- einen Flüssigkeitskanal (12) mit einem Flüssigkeitseinlass (8) und einem Flüssigkeitsauslass (9) und einer im Wesentlichen hydrophoben, dampfdurchlässigen Membran (20), durch welche verdampfte Flüssigkeit hindurchtreten kann;
- einen Dampfraum (23) benachbart zum Flüssigkeitskanal (12) und davon getrennt durch die hydrophobe, dampfdurchlässigen Membran (20), durch die verdampfe Flüssigkeit in den Dampfraum (23) eintreten kann;
- einen mit einem Dampfraum (23) verbundener Dampfkanal (21), umfassend eine Kondensationswand (24) und einem Destillatauslass (52) für ein durch die Kondensation von verdampfter Flüssigkeit aus dem Dampfraum (23) erzeugtes Destillat,
**dadurch gekennzeichnet, dass** der Destillatauslass (52) im Membrandestillationsmodul (14, 16) mit weiteren flüssigkeitsdurchlässigen Membranmitteln (52) zwischen dem Membrandestillationsmodul (14, 16) und einer Destillatsammeleinheit (55) ausgestattet ist, wobei die flüssigkeitsdurchlässigen Membranmittel (52) hydrophile Mikrofiltrations- oder Ultrafiltrationsmembrane mit einem Porendurchmesser von 0,2 bis 50 µm oder Entenschnabelventile sind.

2. Membrandestillationssystem (10) nach Anspruch 1, wobei die Destillatsammeleinheit (55) einen Destillatsammler (54), in dem Destillat von den Membrandestillationsmodulen (14, 16) sammelbar ist, und wenigstens eine Verbindung (53) zwischen den Destillatauslässen (52) und dem Destillatsammler (54) umfasst.

3. Membrandestillationssystem nach einem der vorhergehenden Ansprüche, wobei
- die Mehrzahl von Membrandestillationsmodulen (14, 16, 114, 116, 214, 216) wenigstens drei beträgt;
- eine zweite Destillatsammeleinheit zusätzlich zu der - ersten - Destillatsammeleinheit (55) vorgesehen ist, und
- ein erstes und ein zweites (14, 16) der Membrandestillationsmodule (14, 16) über ihre Destillatauslässe (52) mit der ersten Destillatsammeleinheit (55) verbunden sind und eine drittes (114, 116, 214, 216) der Membrandestillationsmodule über seinen Destillatauslass (52) mit der zweiten Destillatsammeleinheit verbunden ist.

4. Membrandestillationssystem nach einem der vorhergehenden Ansprüche,
wobei das mit dem niedrigsten Druck betriebene Membrandestillationsmodul (16, 116, 216) mit der Destillatsammeleinheit (55) über einen Siphon verbunden ist.

5. Membrandestillationssystem nach einem der vorhergehenden Ansprüche,
wobei wenigstens ein Wärmetauscher zwischen dem Destillatsammler (54) und einer ersten der flüssigkeitsdurchlässigen Membranen (52) vorgesehen ist.

6. Membrandestillationssystem nach Anspruch 4,
wobei die Verbindung (53) der Destillatsammeleinheit (55) mit einer Mehrzahl von Einlässen ausgestattet ist, die mit den Destillatauslässen (52) verbunden sind, und wobei der Wärmetauscher sich entlang der Verbindung erstreckt, insbesondere in eine Gegenstromrichtung.

7. Membrandestillationssystem nach einem der Ansprüche 1 bis 5,
weiter umfassend ein Kondensatormodul (42), in dem Dampf von einem vorhergehenden Membrandestillationsmodul (16, 116, 216) kondensiert wird, und welches mit dem Destillatsammler (54) verbunden ist.

8. Membrandestillationssystem nach Anspruch 6,
wobei eine offene Verbindung zwischen der Destillatsammeleinheit (55) und dem Kondensator (42) vorgesehen ist, sodass beide unter dem gleichen Druck betrieben werden können, und sodass in der Verbindung (53) der Destillatsammeleinheit (55) erzeugter Dampf zum Kondensieren in den Kondensator (42) strömen kann.

9. Membrandestillationssystem nach Anspruch 1,
weiter umfassend einen Dampfaufstiegskreislauf (40) umfassend einen Wärmetauscher, in dem Flüssigkeit im Dampfaufstiegskreislauf durch Abwärme anderer Systeme aufgeheizt werden kann.

10. Verwendung eines Membrandestillationssystems nach einem der vorhergehenden Ansprüche zur Wasseraufbereitung, wobei die Flüssigkeit, die in den Flüssigkeitskanal über den Flüssigkeitseinlass eintritt, eine wässrige Lösung ist, und wobei der Destillatsammler destilliertes Wasser oder trinkbares Wasser umfasst.

11. Verwendung eines Membrandestillationssystems nach einem der vorstehenden Ansprüche 1 bis 8 als Klimaanlagenregeneratorsystem, wobei die Flüssigkeit eine hygroskopische Lösung, welche z.B. ein LiCl-Salz umfasst, wobei die Flüssigkeit im Destillationssystem regeneriert und anschließend der Klimaanlage wieder zugeführt wird.

12. Verfahren zum Starten eines Membrandestillationssystems nach einem der vorstehenden Ansprüche 1 bis 8.

13. Verfahren nach Anspruch 12, wobei die Stoffzufuhr in ein ersten Membrandestillationsmodul (14) eintritt, wonach die hydrophile Membran (52) des Destillatauslasses des ersten Membrandestillationsmoduls (14) gefüllt wird und beginnt als Gasabsperrung zu fungieren, wodurch eine Dampfströmung vom ersten in das zweite Membrandestillationsmodul (16) erzeugt wird.

## Revendications

1. Système de distillation à membrane (10) comprenant une pluralité de modules de distillation à membrane (14, 16) qui sont couplés en série par pression, de telle sorte que chaque module de distillation à membrane (16) suivant, puisse être actionné à une pression plus faible qu'un module de distillation à membrane (14) précédent, l'un des modules de distillation à membrane (14, 16) au moins comprenant:
- un canal de liquide (12) doté d'une entrée de fluide (8) et d'une sortie de fluide (9), et d'une membrane perméable à la vapeur et sensiblement hydrophobe (20) à travers laquelle peut passer un liquide qui s'est évaporé ;
- un espace de vapeur (23) adjacent au canal de liquide (12) et séparé de celui-ci par la membrane perméable à la vapeur et hydrophobe (20), à travers laquelle peut passer un liquide qui s'est évaporé dans l'espace de vapeur (23),
- un canal de vapeur (21) couplé à un espace de vapeur (23) et qui comprend une paroi de condensation (24) et une sortie de distillat (52) d'un distillat généré par la condensation d'un liquide qui s'est évaporé en provenance dudit espace de vapeur (23) ;
**caractérisé en ce que** ladite sortie de distillat (52) dans ledit module de distillation à membrane (14, 16) est doté d'autres moyens de membranes perméables au liquide (52) situés entre ledit module de distillation à membrane (14, 16) et une unité de collecte de distillat (55), lesdits moyens de membranes perméables au liquide (52) étant constitués de membranes de microfiltration ou d'ultrafiltration hydrophiles qui présentent un diamètre de pore compris entre 0,2 µm et 50 µm ou de soupapes à bec de canard.

2. Système de distillation à membrane (10) selon la revendication 1, dans lequel l'unité de collecte de distillat (55) comprend un dispositif de collecte de distillat (54) dans lequel ledit distillat peut être collecté en provenance desdits modules de distillation à membrane (14, 16), et au moins une connexion (53) située entre lesdites sorties de distillat (52) et ledit dispositif de collecte de distillat (54).

3. Système de distillation à membrane selon l'une quelconque des revendications précédentes, dans lequel:
- la pluralité de modules de distillation à membrane (14, 16, 114, 116, 214, 216) sont au moins au nombre de trois ;
- une seconde unité de collecte de distillat est présente en plus de la première unité de collecte de distillat (55) ; et
- un premier et un deuxième (14, 16) desdits modules de distillation à membrane (14, 16) sont couplés par l'intermédiaire de leur sortie de distillat (52) à la première unité de collecte de distillat (55), et un troisième (114, 116, 214, 216) desdits modules de distillation à membrane est couplé par l'intermédiaire de sa sortie de distillat à la seconde unité de collecte de distillat.

4. Système de distillation à membrane selon l'une quelconque des revendications précédentes, dans lequel le module de distillation à membrane (16, 116, 216), actionné à la plus basse pression, est couplé à l'unité de collecte de distillat (55) par l'intermédiaire d'un siphon.

5. Système de distillation à membrane selon l'une quelconque des revendications précédentes, dans lequel un échangeur de chaleur au moins est présent entre le dispositif de collecte de distillat (54) et une première desdites membranes perméables au liquide (52).

6. Système de distillation à membrane selon la revendication 4, dans lequel la connexion (53) de l'unité de collecte de distillat (55) est dotée d'une pluralité d'entrées couplées auxdites sorties de distillat (52), et dans lequel ledit échangeur de chaleur s'étend le long de ladite connexion, en particulier dans une direction d'écoulement à contre-courant.

7. Système de distillation à membrane selon l'une quelconque des revendications 1 à 5, comprenant en outre un module condenseur (42), dans lequel est condensée la vapeur en provenance du module de distillation à membrane précédent (16, 116, 216), et qui est couplé au dispositif de collecte de distillat (54).

8. Système de distillation à membrane selon la revendication 6, dans lequel une connexion ouverte est présente entre l'unité de collecte de distillat (55) et le condenseur (42), de telle sorte que tous deux puissent être actionnés à la même pression, et de telle sorte que la vapeur générée dans la connexion (53) de l'unité de collecte de distillat (55) puisse s'écouler dans le condenseur (42) pour y être condensée.

9. Système de distillation à membrane selon la revendication 1, comprenant en outre un circuit de colonne montante de la vapeur (40) qui comprend un échangeur de chaleur, dans lequel le fluide dans le circuit de colonne montante de la vapeur peut être chauffé au moyen de la chaleur de repos en provenance d'autres systèmes.

10. Utilisation du système de distillation à membrane selon l'une quelconque des revendications précédentes destiné à une purification de l'eau, dans lequel le fluide qui pénètre dans le canal de liquide au niveau de l'entrée de fluide est une solution aqueuse, et dans lequel le dispositif de collecte de distillat comprend de l'eau distillée ou de l'eau potable.

11. Utilisation du système de distillation à membrane selon l'une quelconque des revendications précédentes 1 à 8 en tant que système régénérateur de climatisation, dans lequel le liquide est une solution hygroscopique, qui comprend par exemple un sel LiCl, ledit liquide étant régénéré dans le système de distillation et remis en circulation par la suite dans le climatiseur.

12. Procédé de démarrage d'un système de distillation à membrane selon l'une quelconque des revendications précédentes 1 à 8.

13. Procédé selon la revendication 12, dans lequel la charge d'alimentation pénètre dans un premier module de distillation à membrane (14), suite à quoi la membrane hydrophile (52) de la sortie de distillat du premier module de distillation à membrane (14) se remplit et commence à agir en tant qu' arrêt de gaz, suite à quoi est généré un écoulement de vapeur en provenance du premier module de distillation à membrane dans le deuxième module de distillation à membrane (16).
